# EUROPEAN PATENT APPLICATION

(11) **EP 0 818 278 A2**
(43) Date of publication of application: **14.01.1998**
(21) Application number: 97305192.3
(22) Date of filing: 14.07.1997
(51) Int. Cl.: B25B 27/00, B23P 19/04, B60J 10/00

(54) **Clinching apparatus**

(30) Priority: 12.07.1996 GB 9614721; 12.07.1996 GB 9614745; 18.04.1997 GB 9707878; 01.05.1997 GB 9708947
(71) Applicant: Standard Products Limited, Huntingdon Cambridgeshire PE18 6NU (GB)
(72) Inventor: Pike, Harold, Cambridgeshire CB8 8LR (GB)
(74) Representative: Nash, David Allan

(57) **Abstract**

There is disclosed an apparatus for installing a channel-shaped sealing or finishing strip on a mounting flange, the strip being generally channel-shaped in cross-section but with the side walls of the channel initially splayed apart to facilitate mounting. The apparatus comprises a head portion and a pair of rollers mounted for rotation on the head portion. The rollers define between them a gap of such predetermined distance as to enable them to apply pressure to the splayed-apart side walls of the channel so as to close those side walls towards each other as the head portion is moved along the length of the flange, whereby the side walls of the strip move into a subsequently retained configuration in which they embracingly grip the flange. The head portion comprises first and second housings each of which carries a respective one of the said rollers, and said first and second housings are movable relative to each other to alter the width of the said gap against a biasing means which tends to urge the said housings in a direction to close the said gap. In addition, the apparatus comprises a prising means operable to prise the first and second housings apart to widen the gap and thereby permit the tool to be mounted on the strip.

A method of using the tool to fit a sealing strip onto a flange is also disclosed.

## Description

This invention relates to an apparatus suitable for the clinching of a channel-shaped seal to a flange, particularly as used in the automotive industry.

Seals can be made of a metal-reinforced rubber and/or plastics material, and often have a channel-shaped support portion with projecting sealing limbs. For ease of fitting, the seals may be manufactured with the side walls of the channel slightly splayed apart. After fitting on to the flange, the seal is then secured by clinching the support portion of the seal on to the flange using a suitable tool (for example see GB-A-2215762 and EP-A-0317086).

Although the flange can have a uniform thickness, variations in the thickness usually occur. It is therefore desirable to have a tool or clinching apparatus which can tolerate a sudden increase in thickness of the flange without causing a significant reduction in positive drive and strain or damage to the apparatus.

In practice it can be difficult to fit the clinching apparatus on to the seal prior to clinching.

According to a first aspect of the present invention, there is provided a tool, preferably portable, for installing a channel-shaped sealing or finishing strip on a mounting flange, the strip being generally channel-shaped in cross-section but with the side walls of the channel initially splayed apart to facilitate mounting, the tool comprising a head portion and a pair of rollers mounted for rotation on the head portion, the rollers defining between them a gap of such predetermined distance as to enable them to apply pressure to the splayed-apart side walls of the channel so as to close those side walls towards each other as the head portion is moved along the length of the flange, whereby the side walls of the strip move into a subsequently retained configuration in which they embracingly grip the flange, characterized in that the head portion comprises first and second housings each of which carries a respective one of the said rollers, said first and second housings being movable relative to each other to alter the width of the said gap against a biasing means which tends to urge the said housings in a direction to close the said gap, and in that said tool additionally comprises a prising means operable to prise the first and second housings apart temporarily to widen the gap and thereby permit the tool to be mounted on the strip.

In preferred embodiments of this first aspect of the invention, a spindle is mounted in each housing, each of the spindles being associated with a respective roller of the pair of rollers. Each roller is fixed relative to its spindle, with the spindle being rotatable about its longitudinal axis. Each roller may be detachable from its respective spindle to enable different sets of rollers to be used with a given tool. The present invention also extends to such a tool with rollers demounted.

It is preferred that the first and second housings are capable of undergoing pivotal movement relative to each other. Alternatively, the first and second housings may be arranged to undergo translational movement relative to each other.

According to a second aspect of the present invention, there is provided an apparatus suitable for clinching a channel-shaped seal on to a flange, the apparatus comprising:
first and second housings capable of undergoing pivotal movement relative to each other;
first and second rotatable spindles rotatably carried respectively by the first and second housings, and each capable of receiving a roller;
a drive means for causing rotation of the spindles;
means for urging the spindles together; and
a means for prising apart the spindles and/or the housings to enable the spindles or any roller mounted thereon to be fitted over the seal.

The prising means preferably comprises a lever whereby the said housings may be prised apart by the application of leverage between the first and second housings.

For example, in one embodiment, the lever may be arranged to pivot about an axis located within the head portion of the tool, a first portion of the lever extending from the axis for the application of force and a second portion extending from the axis in the opposite direction to the first portion and comprising a leverage element which interacts with a portion of each of the first and second housings to prise the housings apart on the application of force to the first portion of the lever. In an alternative arrangement, the leverage element could be positioned on the same side of the axis as the first portion, but relatively close to the pivot axis of the lever.

The leverage element may comprise an annular cam which is rotatable by the lever about the pivot axis of the lever through a predetermined angle, and the portion of each of the first and second housings with which said leverage element interacts may comprise a cam follower. In embodiments of the invention in which the rollers are mounted on spindles mounted in each of the housings, the cam follower of each of said housings may be associated with the spindle of that housing.

In a preferred design, the annular cam has a rim around its outer circumference, said rim being of a uniform width apart from one area where the rim is of reduced width, and the two cam followers are in a plane perpendicular to the annular cam and are positioned on either side of the annular cam in contact with the rim, the arrangement being such that when the cam followers are in contact with an area of rim of reduced width, the relative position of the cam followers is unaffected, and when the cam followers are in contact with an area of rim of uniform width, the cam followers are prised apart in a plane parallel to the axis of rotation of the annular cam. In embodiments in which the prising means comprises a lever, the lever is capable of rotating the annular cam between two positions, namely: a first position which has no effect on the relative position of the housings and/or spindles, and a second position which causes the housings and/or spindles to be prised apart. preferably, the cam followers are rings fitted to the spindles. Conveniently the annular cam is fitted into recesses in the housings.

In embodiments of the invention wherein the prising means is a lever having a first portion extending away from the pivot axis for the application of force, it is preferred that the lever also has a second portion which extends away from the pivot axis in the other direction to the first portion, this second portion carrying an extension which extends at least part way across the gap between the rollers and is positioned in relation to the pair of rollers so that it applies pressure to the outside of the base of the channel when the strip is mounted on the flange. This extension may comprise a polished outward facing surface. This extension of the lever permits the tool to be moved along a flange during a fitting operation, and allows pressure to be applied by a user to the base of the channel.

The rollers may be driven to rotate in opposite directions to each other by a suitable drive means. In the embodiment in which the rollers are carried on respective rotatable spindles, the spindles may be driven by the drive means, which preferably comprises a pneumatic motor drive.

In a first embodiment, the drive means may comprise a rotatable worm, each rotatable spindle having its own gear wheel and the two gear wheels being capable of being driven directly or indirectly by the rotatable worm. Conveniently, the worm passes between the first and second housings, and is capable of being connected to an external driving force. This arrangement is described in more detail in our co-pending British Patent Application No. 9707878.6 from which this application claims priority.

In a second embodiment, which is described in more detail in our British Patent Application No. 9707878.6 (from which this application claims priority) and our co-pending European Patent Application No. , the drive means comprises a first drive means in the upper region of the first housing capable of causing rotation of the first rotatable spindle, the first drive means including a first gear, and a second drive means in the upper region of the second housing and capable of causing rotation of the second rotatable spindle, the second drive means including a second gear, the first and second gears being located meshed and radiused so as to allow the gears to remain operatively engaged even when there is a relative pivoting between the first and second housings over a predetermined angle.

In this second embodiment, it is preferred that the first and second housings each have an upper region and a lower region and that each of the first and second rotatable spindles projects downwardly below the lower region of its respective housing, there also being present a resilient closure means tending to urge the lower regions of the first and second housings, and hence the first and second rotatable spindles, together.

Where the apparatus comprises spindles on which the rollers are respectively mounted:
at least one of the spindles has (i) a first shaft rotatable along its own elongate axis, (ii) a second shaft rotatable along its own elongate axis, and (iii) a coupling means which allows the second shaft to be flexibly coupled to the first shaft in a manner such that rotation of the first shaft about its own axis causes rotation of the second shaft about its own axis, such that the axis of the second shaft can adopt a non-rectilinear relationship with respect to the axis of the first shaft;
the or each such spindle has an elongate resiliently flexible member capable of acting so as to tend to urge the axes of the first and second shafts to adopt a rectilinear configuration;
there is provision to allow the spacing between the spindles to increase in a plane in which the spindles lie, whilst preventing flexing of the spindles perpendicular to that plane; and
biasing means are present, tending to urge the housings and hence the spindles, together.

Further details of this arrangement can be found in our co-pending British Patent Application No. 9614721.0 (from which this application claims priority) and corresponding co-pending European Patent Application No. .

As previously stated, the first and second housings are movable relative to each other to alter the width of the said gap against a biasing (or urging) means which tends to urge the said housings in a direction to close the said gap. The biasing means may comprise a resilient closure means which tends to urge the first and second housings (for example the lower regions thereof), and hence the first and second rotatable spindles, together. In a preferred embodiment, the resilient closure means comprises at least one (and normally two) spring washer loaded tension bars. The purpose of the biasing means is to bias the two housing portions of the head, and hence the rollers, together. In use, when a relatively thick part of the flange is encountered, the rollers are able to flex apart against the biasing means, whilst continuing to apply a closing force to the side walls of the strip.

In a preferred design, the prising means has a region, such as an extension, which is able to force the seal on the flange in the plane of the flange in use of the apparatus.

According to another aspect of the present invention, there is provided a method of installing a channel-shaped sealing or finishing strip on a mounting flange using a tool or apparatus as described above, wherein the strip is generally channel-shaped in cross-section but with the side walls of the channel initially splayed apart to facilitate mounting.

In said method, the strip (in its initial form in which the walls of the channel are splayed apart) is first introduced (either manually or automatically, for example by a robot) onto a flange to which it is to be secured, for example the flange running around a body opening of a motor car such as a door opening or boot opening. In order to fit the tool onto the strip, the prising means is operated to move the rollers defining the gap apart sufficiently to accommodate the strip. The prising means is then released to allow the rollers to move together and grip the strip on the flange. The apparatus is then moved along the length of the strip on the flange by a drive means causing rotation of the rollers. The side walls of the channel are thereby clinched together into embracing contact with the flange.

For a better understanding of the present invention and to show how the same may be carried into effect, reference will now be made, by way of example,to the accompanying drawings, in which:
Figure 1 is a side elevation of a prising means of a clinching apparatus in accordance with the present invention;
Figure 2 is a front elevation of the prising means shown in Figure 1 taken along the line II-II;
Figure 3 is a horizontal section through the prising means shown in Figures 1 and 2, taken along the line III-III;
Figure 4 is a horizontal section through an apparatus in accordance with the first embodiment of the present invention;
Figure 5 is a vertical section through the apparatus shown in Figure 4, taken along the line V-V, but with the nut runner in the foreground; and
Figure 6 is vertical section of the apparatus shown in Figures 4 and 5, taken along the line VI-VI.

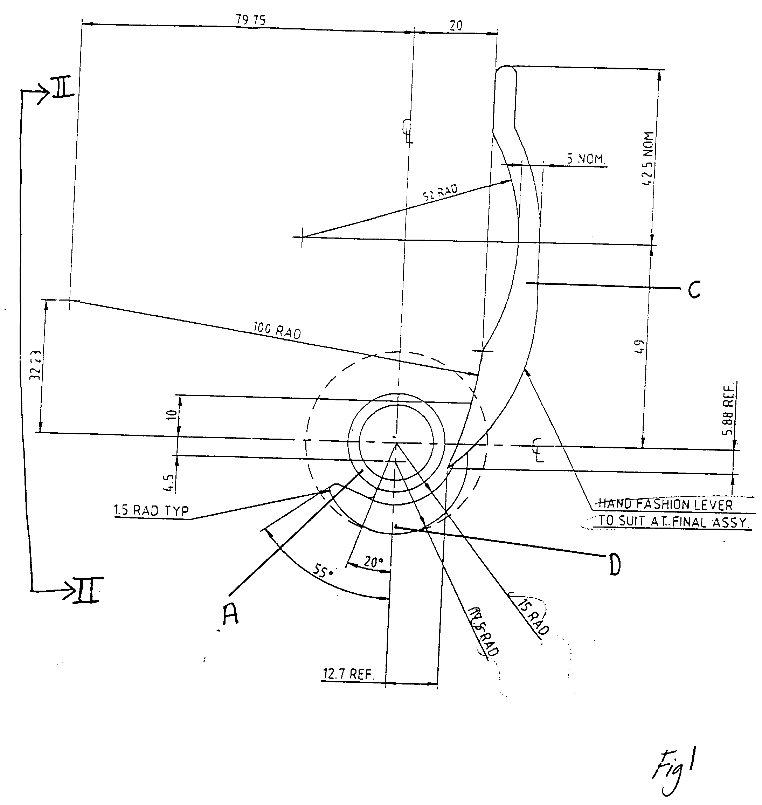

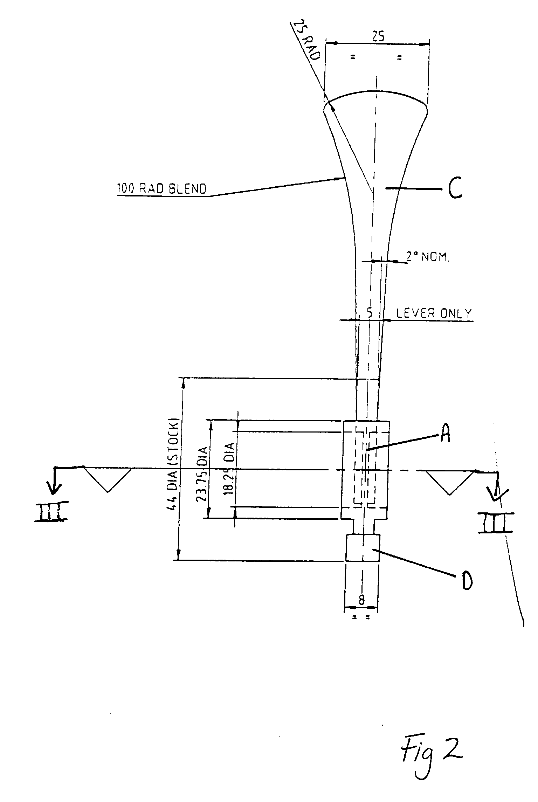

Referring to Figures 1, 2 and 3, there is shown a prising means of a clinching apparatus which comprises an annular cam A, two ring-shaped cam followers B, a lever C and a pressing down zone D. The annular cam is of a uniform width F, apart from in one area of reduced width E.

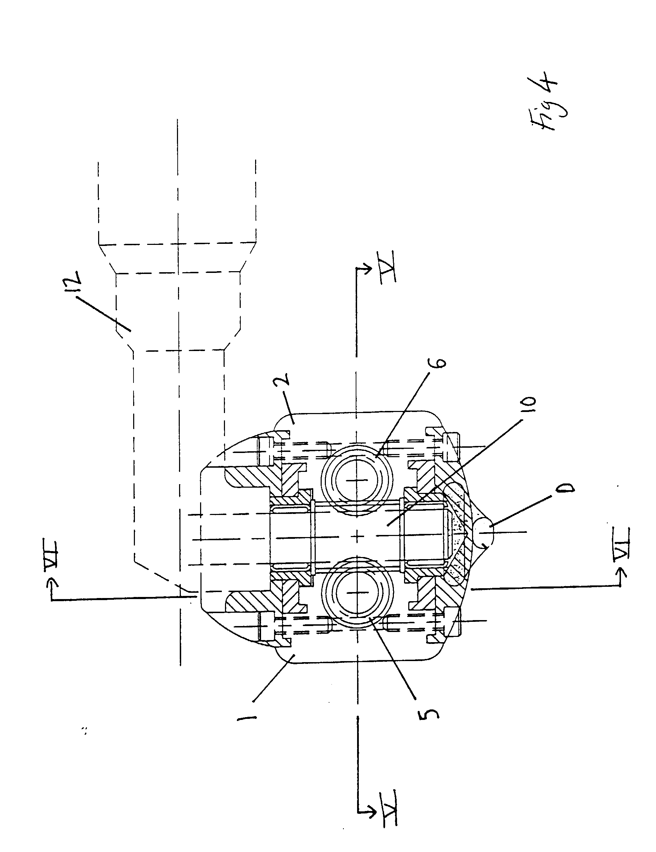

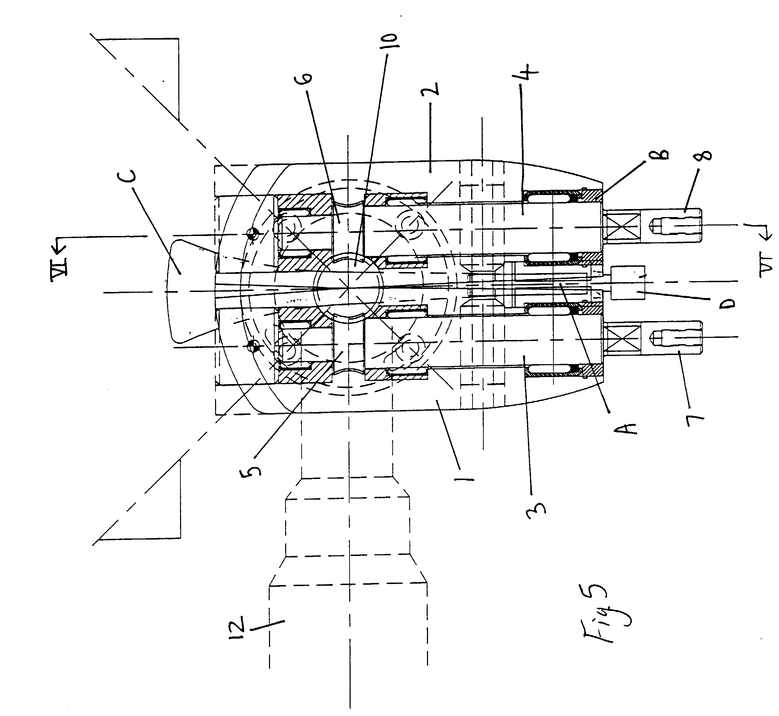

In Figures 4, 5 and 6 there is shown a clinching apparatus which comprises such a prising means. The clinching apparatus further comprises a first housing 1 and a second housing 2, each of which has a centrally located spindle 3 and 4, respectively. Each spindle 3 and 4 is connected to a respective gear wheel 5 and 6 at one end and terminates in a respective clinching roll 7 and 8 at the other end. Between the two gear wheels 5 and 6 there is a worm 10 which passes between the housings 1 and 2 and connects with a nut runner 12 which is external to the housings 1 and 2. As, in the arrangement shown, the two gear wheels 5 and 6 directly mesh with the worm 10, they are in fact worm wheels. The arrangement is such that when drive is applied to the nut runner 12, the nut runner 12 directly drives the worm 10, causing rotation of the worm wheels 5 and 6, which directly drive the spindles 3 and 4 and hence the clinching rolls 7 and 8.

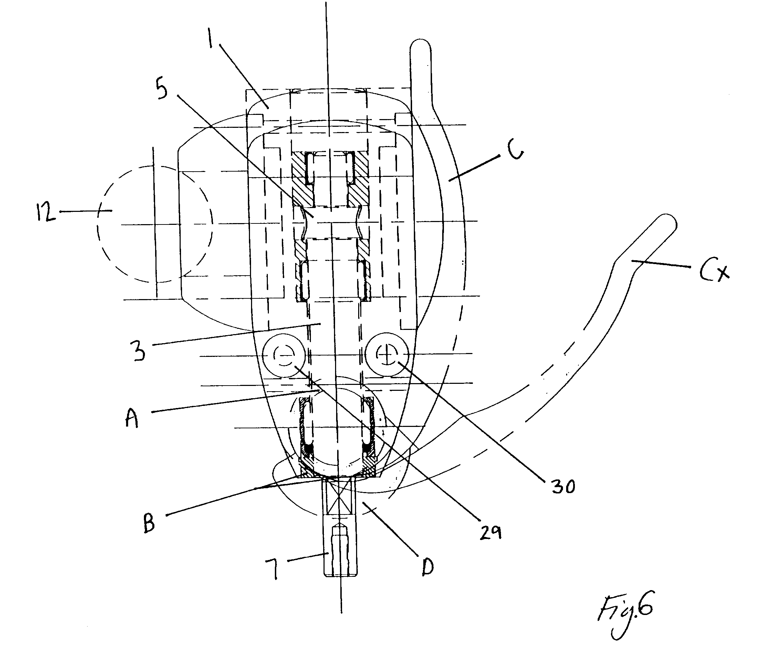

As can be seen in Figure 6, the two housings are held closed via two spring washer loaded tension bars 29 and 30, which resist the moving apart of the two clinching rolls 7 and 8.

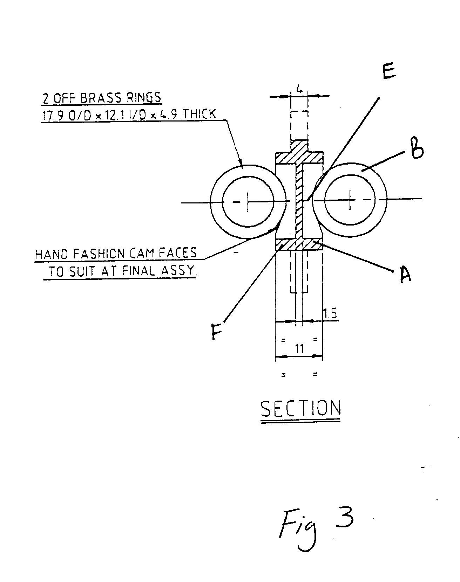

The annular cam A, fits into a recess between and in the two housings 1 and 2. The ring-shaped cam followers are fitted to the spindles 3 and 4 at the base of the housings 1 and 2, at a point just above where the spindles 3 and 4 connect with the clinching rolls 7 and 8. When the lever C is in a first position, the ring-shaped cam followers B are in contact with the annular cam A in the area of reduced width E, as shown in Figure 3. When the lever is moved into a second position Cx, as shown in Figure 6, the ring-shaped cam followers B are in contact with the annular cam A in an area of uniform (increased) width F, which causes the ring-shaped cam followers B, and therefore the spindles 3 and 4 and therefore also the clinching rolls 7 and 8, to be prised apart.

The pressing-down zone D functions to push the seal on to the flange when the lever C is in the first position, and the apparatus is performing its clinching function.

There is thus provided an apparatus suitable for the clinching of a channel shaped-seal to a flange, which includes a prising means, for example to facilitate fitting the apparatus on to the seal.

## Claims

1. An apparatus for installing a channel-shaped sealing or finishing strip on a mounting flange, the strip being generally channel-shaped in cross-section but with the side walls of the channel initially splayed apart to facilitate mounting, the apparatus comprising a head portion and a pair of rollers mounted for rotation on the head portion, the rollers defining between them a gap of such predetermined distance as to enable them to apply pressure to the splayed-apart side walls of the channel so as to close those side walls towards each other as the head portion is moved along the length of the flange, whereby the side walls of the strip move into a subsequently retained configuration in which they embracingly grip the flange,
**characterized in that** the head portion comprises first and second housings each of which carries a respective one of the said rollers, said first and second housings being movable relative to each other to alter the width of the said gap against a biasing means which tends to urge the said housings in a direction to close the said gap, **and in that** said apparatus additionally comprises a prising means operable to prise the first and second housings apart to widen the gap and thereby permit the apparatus to be mounted on the strip.

2. An apparatus according to claim 1,
characterized in that said prising means comprises a lever whereby the said housings may be prised apart by the application of leverage between the first and second housings.

3. An apparatus according to claim 2,
characterized in that said lever pivots about an axis located within the head portion of the apparatus, a first portion of the lever extending from the axis for the application of force and a second portion extending from the axis in the opposite direction to the first portion and comprising a leverage element which interacts with a portion of each of the first and second housings to prise the housings apart on the application of force to the first portion of the lever.

4. An apparatus according to claim 3,
characterized in that said leverage element comprises an annular cam which is rotatable about the pivot axis of the lever and in that said portion of each of the first and second housings with which said leverage element interacts comprises a cam follower.

5. An apparatus according to claim 4,
characterized in that a spindle is mounted in each of said housings, each spindle carrying a respective roller of the pair of rollers, and in that said cam follower of each of said housings is associated with the spindle of that housing.

6. An apparatus according to claim 2, wherein the prising means is a lever having a first portion extending away from the pivot axis for the application of force, and a second portion which extends away from the pivot axis in the other direction to the first portion, said second portion carrying an extension which extends across at least a part of the gap between the rollers and is positioned in relation to the pair of rollers so that it applies pressure to the outside of the base of the channel when the strip is mounted on the flange.

7. An apparatus according to claim 6,
characterized in that said extension comprises a polished outward facing surface.

8. An apparatus suitable for clinching a channel-shaped seal on to a flange, the apparatus comprising:
first and second housings capable of undergoing pivotal movement relative to each other;
first and second rotatable spindles rotatably carried respectively by the first and second housings;
a drive means for causing rotation of the spindles;
means for urging the spindles together; and
means for prising apart the spindles and/or the housings to enable the spindles or any roller mounted thereon to be fitted over the seal.

9. An apparatus according to claim 8, wherein the apparatus further comprises a rotatable worm, and each rotatable spindle has its own gear wheel; and
wherein the two gear wheels are capable of being driven directly or indirectly by the rotatable worm.

10. An apparatus according to claim 9, wherein the worm passes between the first and second housings, which worm is capable of being connected to an external driving force.

11. An apparatus according to claim 8, wherein:
the first and second housings each have an upper region and a lower region;
the first rotatable spindle, carried by the first housing, projects downwardly below the lower region of the first housing;
the second rotatable spindle, carried by the second housing, projects downwardly below the lower region of the second housing;
the drive means comprises a first drive means in the upper region of the first housing capable of causing rotation of the first rotatable spindle, the first drive means including a first gear, and a second drive means in the upper region of the second housing and capable of causing rotation of the second rotatable spindle, the second drive means including a second gear, the first and second gears being located meshed and radiused so as to allow the gears to remain operatively engaged even when there is a relative pivoting between the first and second housings over a predetermined angle; and
there is also present a resilient closure means tending to urge the lower regions of the first and second housings, and hence the first and second rotatable spindles, together.

12. An apparatus according to any preceding claim, wherein the means for prising comprises:
an annular cam;
two cam followers associated with the housings or spindles; and
a lever capable of rotating the annular cam through a predetermined angle.

13. An apparatus according to claim 12, wherein
the annular cam has a rim around its outer circumference, said rim being of a uniform width apart from one area where the rim is of reduced width; and
the two cam followers are in a plane perpendicular to the annular cam and are positioned on either side of the annular cam in contact with the rim, the arrangement being such that when the cam followers are in contact with an area of rim of reduced width, the relative position of the cam followers is unaffected, and when the cam followers are in contact with an area of rim of uniform width, the cam followers are prised apart in a plane parallel to the axis of rotation of the annular cam.

14. An apparatus according to claim 12 or 13, wherein the lever is capable of rotating the annular cam between two positions, namely: a first position which has no effect on the relative position of the housings and/or spindles, and a second position which causes the housings and/or spindles to be prised apart.

15. An apparatus according to claims 12, 13 or 14, wherein the cam followers are rings fitted to the spindles.

16. An apparatus according to any of claims 12 to 15, wherein the annular cam is fitted into recesses in the housings.

17. An apparatus according to any preceding claim, wherein the prising means has a region which can be used to force the seal on to the flange in the plane of the flange.

18. A method of installing a channel-shaped sealing or finishing strip on a mounting flange using a tool or apparatus as claimed in any preceding claim, wherein:
the strip having side walls which are splayed apart is fitted onto the flange;
the prising means of said apparatus is operated to move the rollers apart sufficiently to accommodate the strip;
the prising means is released to allow the rollers to move together and grip the strip on the flange; and
the apparatus is moved along the length of the strip on the flange by a drive means causing rotation of the rollers.
